# EUROPÄISCHE PATENTSCHRIFT

(11) **EP 1 205 347 B1**
(45) Veröffentlichungstag und Bekanntmachung des Hinweises auf die Patenterteilung: **21.02.2007**
(21) Anmeldenummer: 01123478.8
(22) Anmeldetag: 28.09.2001
(51) Int. Cl.: B60P 1/64

(54) **Fahrzeug, vorzugsweise Abfallsammelfahrzeug, mit als Wechselbehälter ausgebildeten Containern**
Vehicle, especially refuse collection vehicle, with interchangeable collecting unit in form of a container
Véhicule, en particulier véhicule de ramassage d'ordures, avec benne interchangeable sous la forme d'un conteneur

(30) Priorität: 10.11.2000 DE 20019391 U
(43) Veröffentlichungstag der Anmeldung: 15.05.2002
(73) Patentinhaber: FAUN Umwelttechnik GmbH & Co., 90411 Nürnberg (DE)
(72) Erfinder: Kirchhoff, Johannes, Dr., 58636 Iserlohn (DE); Geisseler, Helmut, 58640 Iserlohn (DE)
(74) Vertreter: Gossel, Hans K.

(56) Entgegenhaltungen:
- EP-A- 0 618 105
- DE-A1- 19 711 782
- DE-U- 7 535 898

## Beschreibung

Die Erfindung betrifft ein Fahrzeug gemäß dem Oberbegriff von Anspruch 1, vorzugsweise ein Abfallsammelfahrzeug, für als Wechselbehälter ausgebildete Container. Ein Fahrzeug dieser Art ist aus DE 19711782 A bekannt.

Bei einem aus EP 0 795 436 A2 weiter bekannten Fahrzeug dieser Art bestehen die Kupplungseinrichtungen aus quer zur Längsmittelebene des Fahrzeugs gegensinning aus- und einfahrbaren Bolzen des Schlittens und die Gegenkupplungseinrichtungen aus Aufnahmetaschen, die an den Innenseiten der seitlichen Bodenträger der Container vorgesehen sind. Abgesehen davon, daß bei dem bekannten Fahrzeug das Ankuppeln des Containers an die Kupplungseinrichtung des Schlittens schwierig ist und ein gewisses Geschick erfordert, läßt sich bei diesem der Container nur dadurch bis in seine vordere Stellung auf dem Fahrzeug verschieben, daß der mit der vorderen Gegenkupplungseinrichtung gekoppelte Schlitten gelöst und soweit nach hinten verfahren wird, daß er mit im dem mittleren unteren Bereich des Containers angeordneten weiteren Gegenkupplungseinrichtungen gekuppelt werden kann. Erst nach der erneuten Kupplung kann der Container sodann in seine vordere Stellung verschoben werden.

Aus EP 0 618 105 A1, WO 90 14 250 A1, DE 27 58 693 A1, DE 75 35 898 U1 und DE 197 11 782 A1 sind auf Kipprahmen eines Fahrzeugs verfahrbare Schlitten bekannt, auf denen schwenkbar Greifarme zur Aufnahme und zum Absetzen von auf dem Boden stehenden Containern schwenkbar gelagert sind.

Ein besonderes Problem bei diesen Fahrzeugen besteht darin, daß der Schwenkwinkel der Greifarme beschränkt ist und der wirksame Hebelarm der Greifarme von dem Schwenkwinkel abhängt.

Aufgabe der Erfindung ist es daher, ein Fahrzeug der eingangs angegebenen Art zu schaffen, bei dem der die Container aufziehende und absetzende Greifarm mit großem Schwenkwinkel und günstigem, die Kraft übertragenden Hebelarm an dem Container angreift.

Erfindungsgemäß wird diese Aufgabe durch die Merkmale des Anspruchs 1 gelöst.

Bei dem erfindungsgemäßen Fahrzeug läßt sich der bis über die hintere Seite des Kipprahmens ausschwenkbare Greifarm in einfacher und gut sichtbarer Weise an die Gegenkupplungseinrichtungen des Containers ankuppeln. Durch Verschwenken des Greifarms läßt sich sodann der Container auf den Kipprahmen aufziehen. Da der Greifarm den Container bis in den Bereich des in Fahrtrichtung liegenden vorderen Endes des Schlittens aufzuziehen vermag, kann der Container nur durch einmaliges Verfahren des Schlittens bis in den vorderen Bereich des Fahrzeugs, also beispielsweise soweit verfahren werden, daß er sich an eine Presse ankuppeln läßt. Es ist also nicht erforderlich, den Schlitten zunächst am vorderen Ende des Containers und anschließend an Gegenkupplungseinrichtungen im mittleren Bereicht des Containers anzuschließen, um diesen bis in seine vordere Stellung auf dem Fahrzeug verschieben zu können. Da der Hydraulikzylinder an einer im Schlitten gelagerten Schwinge angelenkt ist, die ihrerseits durch einen Antrieb, beispielsweise einen Hydraulikzylinder, verschwenkbar ist, wird in einfacher Weise der gewünschte große Schwenkwinkel des Greifarms mit günstigen die Kraft übertragenden Hebelarmen erreichen erreicht.

Zweckmäßigerweise ist der Greifarm an seinem freien Ende mit einem Haken versehen.

In weiterer Ausgestaltung der Erfindung ist vorgesehen, daß das Hakenmaul durch eine schwenkbare Klinke, verschließbar ist, um bei dem Verschwenken des Schwenkarms über Kopf zu verhindern, daß die Kupplungseinrichtungen des Greifarms außer Eingriff mit den Gegenkupplungseinrichtungen des Containers kommen. Der Greifarm kann durch einen Hydraulikzylinder verschwenkbar sein.

Zweckmäßigerweise besteht die Gegenkupplungseinrichtung des Containers aus einer Öse, in die sich der Greifarm in einfacher Weise einhaken läßt.

Ein Ausführungsbeispiel der Erfindung wird nachstehend anhand der Zeichnung näher erläuter. In dieser zeigen
Fig. 1 bis 8 eine Seitenansicht eines Abfallsammelfahrzeuges in unterschiedlichen Stellungen des Greifarms und des Kipprahmens während des Aufnehmens eines Behälters vom Boden und des Absetzens und Verschiebens auf dem Kipprahmen und
Fig. 9 eine perspektivische Darstellung des auf dem Kipprahmen verfahrbaren Schlittens mit dem schwenkbaren Greifarm mit Antriebseinrichtungen.

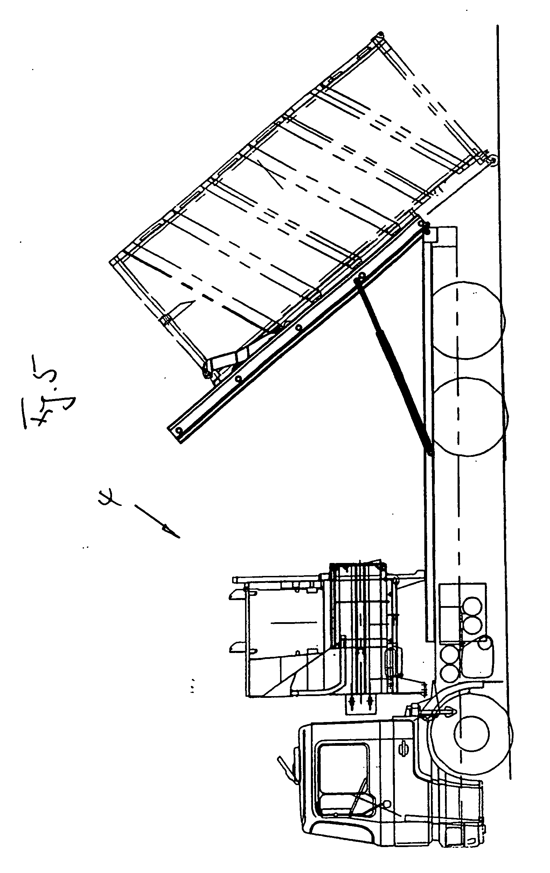

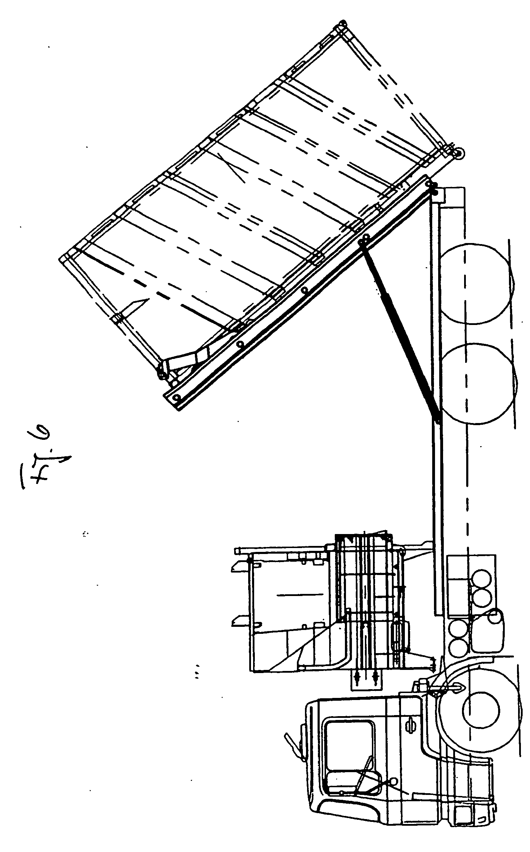

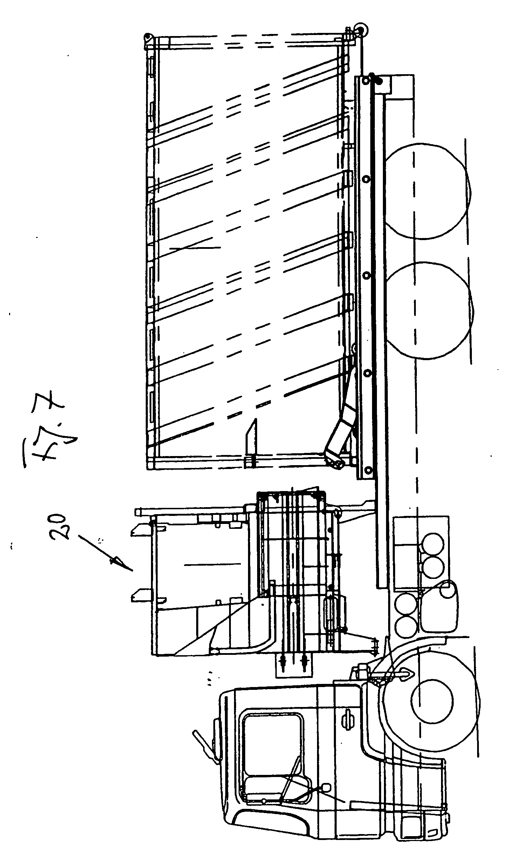

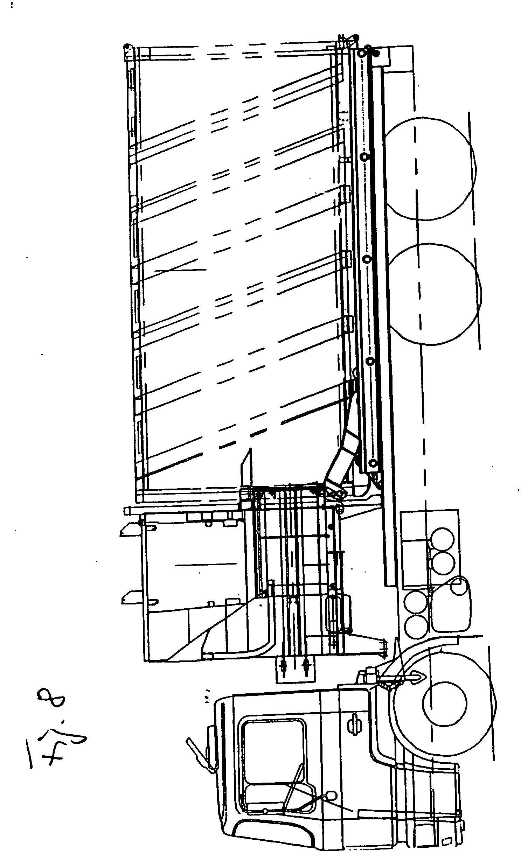

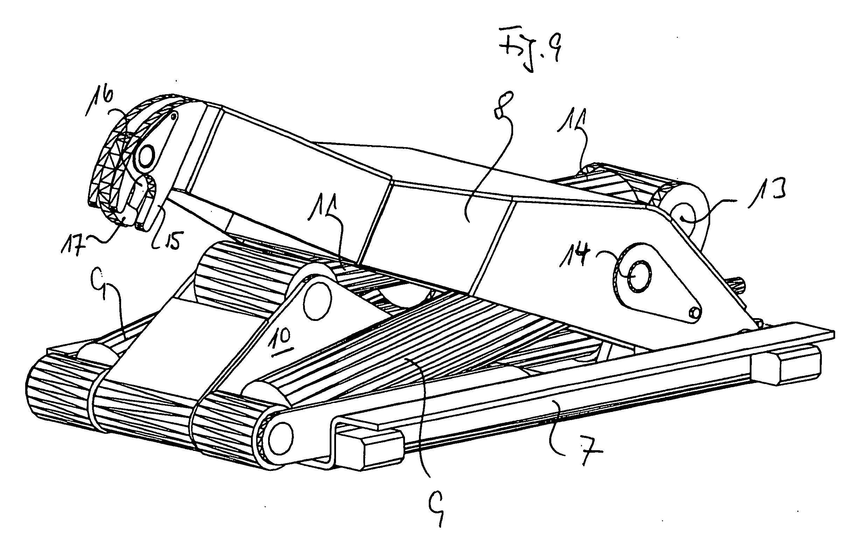

Der Kipprahmen 1 ist im Bereich seiner hinteren Seite um die Schwenkachse 2 schwenkbar an dem Chassis 3 des im ganzen aus den Fig. 5 bis 8 ersichtlichen Müllsammelfahrzeugs 4 angelenkt. Die Art der Verschwenkung des Kipprahmens 1 relativ zu dem Chassis 3 durch einen Hydraulikzylinder 5 ist aus EP 0 795 436 A2 bekannt, so daß auf diese zur näheren Beschreibung Bezug genommen wird. Ein Unterschied ergibt sich nur daraus, daß der Kipprahmen 1 zur Aufnahme des Containers 6 nicht über die hintere Kante des Chassis 3 verlängert zu werden braucht, wie es bei dem aus EP 0 795 436 A2 bekannten Abfallsammelfahrzeug der Fall ist. Die verschiebliche Führung des aus Fig. 9 ersichtlichen Schlittens 7 in Führungen des Kipprahmens 1 entspricht ebenfalls der in EP 0 795 436 A2 beschriebenen Anordnung, so daß in auch insoweit auf diese Bezug genommen wird und die verschiebliche Führung des Schlittens in dem Kipprahmen und die den Kipprahmen verfahrenden Antriebseinrichtungen nicht beschrieben werden.

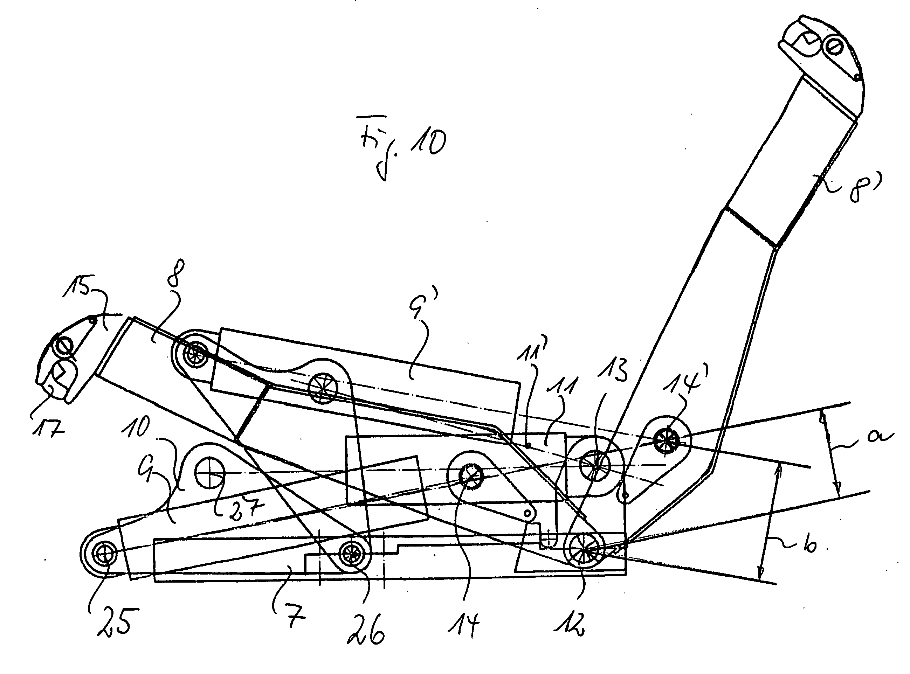

Wie aus Fig. 9 und 10 ersichtlich ist, ist der Greifarm 8 in dem hinteren Bereich des aus einem Verschieberahmen bestehenden Schlittens 7 schwenkbar gelagert. Um den Schwenkarm 8 um den erforderlichen großen Schwenkwinkel schwenken zu können, ist der Schwenkzylinder 9 an einem in dem Schlitten 7 schwenkbar gelagerten Lenker oder Schwinge 10 angelenkt, die seinerseits durch einen Hydraulikzylinder 11 verschwenkbar ist. Wie insbesondere aus Fig. 10 ersichtlich ist, ist der Greifarm 8 um die Achse 12 in dem Schlitten 7 schwenkbar gelagert. Der Greifarm 8 wird von dem Hyraulikzylinder 9 verschwenkt, dessen Kolbenstange um die Achse 14 schwenkbar an dem Greifarm 8 angelenkt ist. Der Hydraulikzylinder 9 ist um die Achse 25 schwenkbar mit dem Lenker 10 verbunden, der um die Achse 26 schwenkbar im Schlitten gelagert ist. Der Lenker 10 wird von dem Hydraulikzylinder 11 verschwenkt, der um die Achse 13 schwenkbar in dem Schlitten 7 gelagert ist und dessen Kolbenstange um die Achse 27 schwenkbar an dem Lenker 10 angelenkt ist.

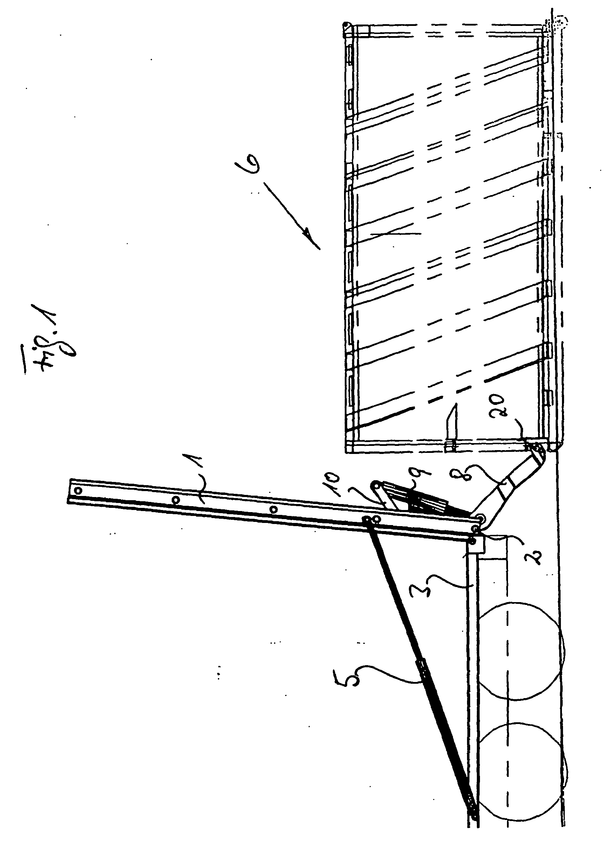

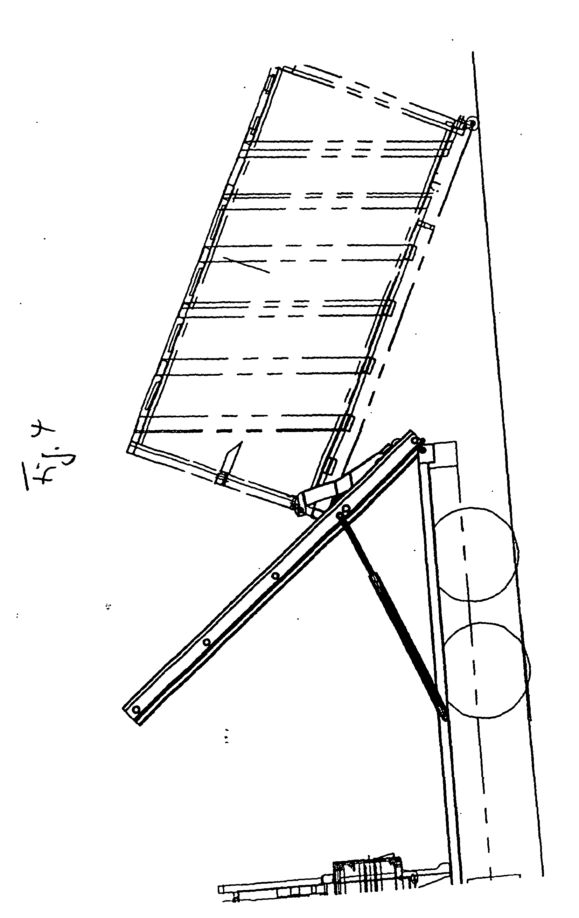

In Fig. 10 ist der Greifarm 8 einmal in seiner an den Schlitten 7 angeschwenkten Stellung dargestellt, in der er den Container, wie aus den Fig. 4 bis 7 ersichtlich, aufgezogen hat. Zum andern ist der Greifarm 8' in seiner ausgeschwenkten Stellung dargestellt, in der er sich beim Ankuppeln an den Container 6 (siehe Fig. 1) befindet. Die Stellung der Hebel und Zylinder in der ausgeschwenkten Stellung des Greifarms ' sind mit Bezugsziffern versehen, die ebenfalls mit einem " ' " versehen sind.

Wie aus Fig. 10 ersichtlich ist, greift der Zylinder 9 an den Greifarm 8 in der an den Schlitten 7 angeschwenkten Stellung mit dem Hebelarm a und in- der ausgeschwenkten Stellung des Hebels 8' an diesen mit dem Hebelarm b an. In beiden Stellungen wird also aufgrund der günstigen Hebelarmverhältnisse von dem Schwenkzylinder 9, 9' auf den Greifarm 8, 8' ein großes Drehmoment übertragen.

Wie aus Fig. 9 ersichtlich ist, können die den Greifarm 8 verschwenkenden und an dem Lenker 10 angelenkten Zylinder 9 doppelt vorgesehen sein.

Der Greifarm 8 ist an seinem vorderen Ende mit einem Haken 15 versehen, dessen Hakenmaul 16 in Richtung zum Chassis 3 hin offen ist. Dieses Hakenmaul läßt sich durch eine schwenkbare Klinke 17 verschließen, die mit einem besonderen Schwenkantrieb versehen sein kann.

Ein hinter dem Müllsammelfahrzeug 4 abgesetzter Container 6 weist an seinem vorderen Ende eine Öse auf, die beispielsweise aus einer von seitlichen Schenkeln getragenen Querstange 20 besteht. Durch Hochstellen des Kipprahmens 1 und Ausschwenken des Greifarms 8 wird der Haken 15 in der Weise in Eingriff in die Öse des Containers 6 gebracht, daß das Hakenmaul 16 die Kupplungsstange 20 umfaßt. Anschließend wird Kupplungsstange 20 durch Ausschwenken der Klinke 17 in dem Hakenmaul verriegelt.

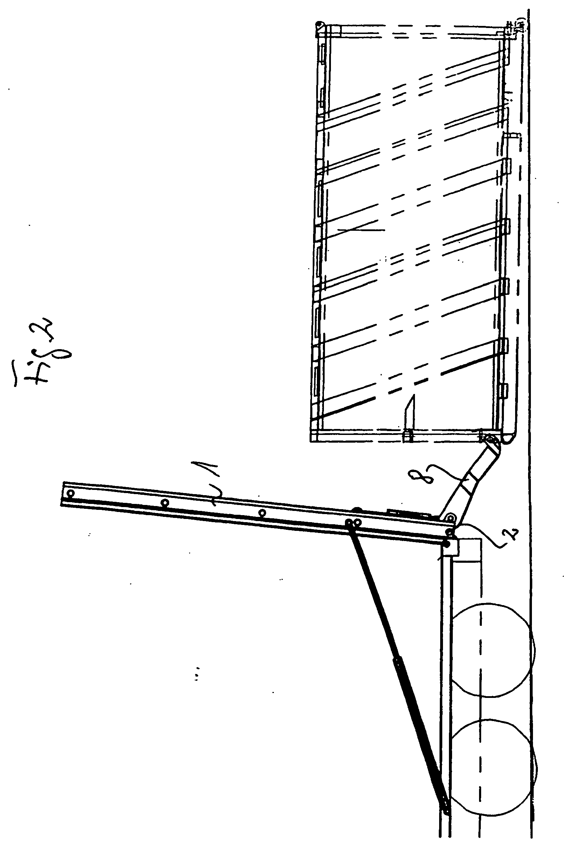

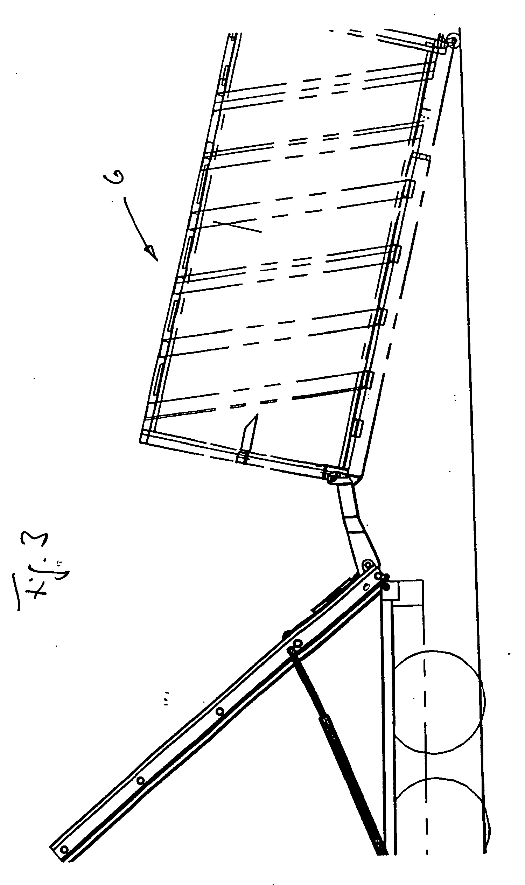

Die Ankupplung des Greifarms 8 an den hinter dem Müllsammelfahrzeug flach liegenden Container 6 ist aus Fig. 1 ersichtlich. Nach dieser Ankupplung wird der Greifarm 8 in Richtung auf den Kipprahmen 1 verschwenkt, so daß der Container 8 in der aus den Fig. 2 bis 5 ersichtlichen Weise auf den Kipprahmen aufgezogen wird. Der Schwenkbewegung des Greifarms 8 wird die Schwenkbewegung des Kipprahmens 1 überlagert, so daß in der aus Fig. 5 ersichtlichen Weise der Container 4 auf den teilweise abgeschwenkten Kipprahmen 1 aufliegt. Der Kipprahmen wird sodann vollständig auf das Chassis 3 abgesenkt und der Schlitten wird sodann soweit in Richtung auf die Schüttung 20 verfahren, daß der Container 4 mit der Presse gekuppelt werden kann und nach Öffnung der Einfüllöffnung des Containers in die Presse eingeschütteter Abfall in den Container eingeschoben werden kann.

Das Aufnehmen und Absetzen, auch hochkant stehender Container, erfolgt in entsprechend umgekehrter Weise.

## Patentansprüche

1. Fahrzeug, vorzugsweise Abfallsammelfahrzeug, für als Wechselbehälter ausgebildete Container, bestehend
aus einem auf dem Fahrzeug gelagerten Kipprahmen (1), der durch eine Antriebseinrichtung (5) um eine am hinteren Ende des Fahrzeugrahmens befindliche Querachse (2) bis in den Bereich einer vertikalen Stellung schwenkbar ist, und
aus einem auf dem Kipprahmen (1) in Fahrzeuglängsrichtung verschieblich geführten und durch eine Antriebseinrichtung bis in den Bereich des hinteren Endes des Kipprahmens verfahrbaren Schlittens, (7) der mit einer lösbaren Kupplungseinrichtung zum Ankuppeln des Gegenkupplungseinrichtungen (20) aufweisenden Containers (6) versehen ist,
wobei die Kupplungseinrichtung aus einem an dem Schlitten (7) schwenkbar gelagerten Greifarm (8) besteht, der mit den Gegenkupplungseinrichtungen (20) kuppelbar und durch eine Antriebseinrichtung um einen so großen Winkel schwenkbar ist, daß er zum einen bei aufgerichtetem Kipprahmen mit den Gegenkupplungen des flach oder hochkant auf dem Boden stehenden Containers (6) kuppelbar ist und zum anderen, bei horizontal liegenden Kipprahmen, das mit Gegenkupplungseinrichtungen (20) versehene Ende des Containers (6) im Bereich des in Fahrtrichtung liegenden vorderen Endes des Schlittens auf den Kipprahmen absetzen kann,
wobei der Greifarm (8) durch einen Hydraulikzylinder (9) verschwenkbar ist, das Fahrzeug weiter **dadurch gekennzeichnet, dass**
der Hydraulikzylinder (9) an einer in dem Schlitten (7) gelagerten Schwinge (10) angelenkt ist, die ihrerseits durch einen Antrieb, beispielsweise einen Hydraulikzylinder (11), verschwenkbar ist.

2. Fahrzeug nach Anspruch 1, **dadurch gekennzeichnet, daß** der Greifarm (8) an seinem freien Ende mit einem Haken (15) versehen ist.

3. Fahrzeug nach Anspruch 2, **dadurch gekennzeichnet, daß** das Hakenmaul des Hakens (15) durch eine verschwenkbare Klinke (17) verschließbar ist.

4. Fahrzeug nach einem der Ansprüche 1 bis 3, **dadurch gekennzeichnet, daß** die Gegenkupplungseinrichtungen aus einer Öse bestehen.

## Claims

1. Vehicle, preferably refuse collection vehicle, for containers designed as interchangeable containers, comprising
a tipping frame (1) which is mounted on the vehicle and can be pivoted by a driving device (5) about a transverse spindle (2), situated at the rear end of the vehicle frame, into the region of a vertical position, and
a slide (7) which is guided displaceably in the longitudinal direction of the vehicle on the tipping frame (1) and is moveable by means of a driving device into the region of the rear end of the tipping frame and is provided with a releasable coupling device for the coupling of the container (6) which has mating coupling devices (20),
the coupling device comprising a gripping arm (8) which is mounted pivotably on the slide (7), can be coupled to the mating coupling devices (20) and can be pivoted by means of a driving device through an angle of a magnitude such that, firstly, when the tipping frame is upright, the said gripping arm can be coupled to the mating couplings of the container (6), which stands flat or upright on the ground, and, secondly, when the tipping frame is situated horizontally, that end of the container (6) which is provided with mating coupling devices (20) can be deposited onto the tipping frame in the region of the front end, which is situated in the direction of travel, of the slide,
the gripping arm (8) being pivotable by means of a hydraulic cylinder (9), the vehicle furthermore being **characterized in that**
the hydraulic cylinder (9) is coupled to a rocker (10) which is mounted in the slide (7) and which, for its part, can be pivoted by means of a drive, for example a hydraulic cylinder (11).

2. Vehicle according to Claim 1, **characterized in that** the gripping arm (8) is provided at its free end with a hook (15).

3. Vehicle according to Claim 2, **characterized in that** the hook mouth of the hook (15) can be closed by means of a pivotable latch (17).

4. Vehicle according to one of Claims 1 to 3, **characterized in that** the mating coupling devices comprise an eye.

## Revendications

1. Véhicule, en particulier véhicule de ramassage d'ordures, pour des conteneurs réalisés comme benne interchangeable, constitué d'un cadre de basculement (1) logé sur le véhicule qui peut être amené à pivoter par une installation d'entraînement (5) autour d'un axe transversal (2) se trouvant à l'extrémité arrière du châssis du véhicule jusque dans la zone d'une position verticale, et d'un chariot (7) guidé d'une manière déplaçable sur le cadre de basculement (1) dans la direction longitudinale du véhicule et déplaçable par une installation d'entraînement jusque dans la zone de l'extrémité arrière du cadre de basculement, qui est pourvu d'une installation de couplage relâchable pour l'accouplement du conteneur (6) présentant des installations de contre-couplage (20), où l'installation de couplage est constituée d'un bras de préhension (8) logé d'une manière pivotante au chariot (7) qui peut être couplé avec les installations de contre-couplage et peut être amené à pivoter par une installation d'entraînement autour d'un angle suffisamment grand pour que, d'une part, lorsque le cadre de basculement est relevé, il puisse être couplé avec les contre-couplages du conteneur (6) se trouvant à plat ou de chant sur le sol et que, d'autre part, le cadre de basculement s'étendant horizontalement, il puisse déposer l'extrémité du conteneur (6) pourvue des installations de contre-couplage (20) dans la zone de l'extrémité du chariot, avant dans la direction de roulement, sur le cadre de basculement, où le bras de préhension (8) peut être amené à pivoter par un vérin hydraulique (9), le véhicule étant **caractérisé en outre en ce que** le vérin hydraulique (9) est articulé à un bras oscillant (10) logé dans le chariot (7) qui peut être amené à pivoter par un organe d'entraînement, par exemple un vérin hydraulique (11).

2. Véhicule de ramassage d'ordures selon la revendication 1, **caractérisé en ce que** le bras de préhension (8) présente à son extrémité libre un crochet (15).

3. Véhicule de ramassage d'ordures selon la revendication 2, **caractérisé en ce que** la gueule du crochet (15) peut être fermée par un cliquet pivotant (17).

4. Véhicule de ramassage d'ordures selon l'une des revendications 1 à 3, **caractérisé en ce que** les installations de contre-couplage sont constituées d'un oeillet.
